# EUROPEAN PATENT APPLICATION

(11) **EP 2 515 536 A1**
(43) Date of publication of application: **24.10.2012**
(21) Application number: 10837551.0
(22) Date of filing: 13.12.2010
(51) Int. Cl.: H04N 7/173, G06F 13/00

(54) **CONTENT DISTRIBUTION SYSTEM, CONTENT DISTRIBUTION DEVICE, CONTENT PLAYBACK TERMINAL, AND CONTENT DISTRIBUTION METHOD**

(30) Priority: 15.12.2009 JP 2009284283
(71) Applicant: Sharp Kabushiki Kaisha, Osaka-shi, Osaka 545-8522 (JP)
(72) Inventor: TAKAHASHI Maki, Osaka-shi Osaka 545-8522 (JP)
(74) Representative: Müller - Hoffmann & Partner
(86) International application number: PCT/JP2010/072349
(87) International publication number: WO 2011/074525

(57) **Abstract**

In a content distribution system in which a content distribution device distributes video content to a content playback terminal, the content distribution device multicasts video content added with cash control information to the content playback terminal and other content playback devices, before a user plays back video content selected from a distribution menu. The distribution playback terminal writes the video content in a temporal storage unit included in the distribution playback terminal. If the video content selected by the user is stored in the temporal storage unit, the video content is played back. On the other hand, if the video content selected is not stored in the temporal storage unit, a distribution request for the video content selected is made to the content distribution device.

## Description

### TECHNICAL FIELD

The present invention relates to a content distribution system, a content distribution device, a content playback terminal, and a content distribution method.
Priority is claimed on Japanese Patent Application No. 2009-284283, filed December 15, 2009, the content of which is incorporated herein by reference.

### BACKGROUND ART

Recently, high-speed broadband lines, such as an ADSL (Asymmetric Digital Subscriber Line) or an FTTH (Fiber To The Home, which is data communication service through optical fibers and provided for home use), have been widespread. Along with the widespread use of high-speed broadband lines, a content distribution system that implements on-demand video content distribution service with respect to various moving pictures, such as movies, dramas, or news, has been practically used.
Regarding a conventional content distribution system for on-demand distribution, a content playback terminal accesses a content distribution device using an HTML (HyperText Markup Language) browser included in the content playback terminal, and receives a video content distribution menu described in HTML. Then, from the distribution menu displayed on the HTML browser, a user selects a desired video content to be played back, thereby initiating on-demand distribution of the video content.

Additionally, as a method of playing back video content to be distributed, there is a streaming playback that is a method in which video content is received in real time using, for example, an RTP (Real Time Protocol) that is a dedicated protocol for real-time video content distribution, and the reception and playback of the video content are performed at the same time (see, for example, Patent Document 1).
Further, there is a progressive download playback that is a method in which video content is downloaded using an HTTP (Hypertext Transfer Protocol) that is a protocol for general-purpose data communication, and playback of the video content is initiated when the amount of received data becomes a predetermined amount (see, for example, Patent Document 2).

### CITATION LIST

### [Patent Document]

[Patent Document 1] PCT Application International Publication No. 2004/077790
[Patent Document 2] Japanese Patent Unexamined Application, First Publication No. 2002-94551

### DISCLOSURE OF THE INVENTION

### Problems to be Solved by the Invention

Regarding both the streaming playback disclosed in Patent Document 1 and the progressive download playback disclosed in Patent Document 2, however, communication between the content distribution device and the content playback terminal is performed by one-on-one unicast communication.
For this reason, if many content playback terminals access to the content distribution device within a short duration, the communication traffic required for the content distribution device to transmit video content to the content playback terminals significantly increases.

The present invention has been made to solve the above problem, and provides a content distribution system, a content distribution device, a content playback terminal, and a content distribution method, which reduce, compared to the conventional case, the communication traffic required for the content distribution device to transmit video content to the content playback terminals even if many content playback terminals access the content distribution device within a short duration.

### Means for Solving the Problems

(1) The present invention has been made to solve the above problem. One aspect of the present invention is a content distribution system in which a content distribution device performs on-demand distribution of video content to a content playback terminal via a network. The content distribution device includes: a storage unit configured to store menu information including a list of a plurality of video contents; and a data distributor configured to add cache control information to the menu information and distribute the video content, the cache control information including distribution control information in which video content and a method of distributing the video content are described. The content playback terminal includes: a display unit; a temporal storage unit; a video content playback unit configured to cause the display unit to display the menu information and the video content; a browser unit configured to add identification information of video content to a distribution request and transmit the distribution request to the video content distribution device, the identification information being selected on the distribution menu displayed on the display unit; and a data transmission and reception unit configured to request from the content distribution device, video content selected from the menu information, if the cache control information is not added to the menu information, and the data transmission and reception unit being configured to add information indicating the distribution control information to a distribution request for video content included in the cache control information if the cache control information is added to the menu information, transmit the distribution request to the content distribution device, and write into the temporal storage unit, the video content distributed in response to the distribution request.

(2) Additionally, regarding the content distribution system according to the one aspect of the present invention, the data distributor is configured to perform, in response to a distribution request for video content selected by a user, distribution of the video content from the content distribution device to the content playback terminal by a unicast protocol that is a first distribution method, on the other hand, the data distributor being configured to perform, in response to a distribution request for video content described in the cache control information, distribution of the video content from the content distribution device to the content playback terminal by a multicast protocol that is a second distribution method.

(3) Additionally, regarding the content distribution system according to the one aspect of the present invention, the menu information includes information to be added to video content described in the cache control information when the video content is displayed as a distribution menu, the information being different from information to be added to another video content.

(4) Regarding the content distribution system according to the one aspect of the present invention, the content distribution device further includes a distribution method controller configured to generate the distribution control information in which one of the unicast protocol and the multicast protocol, which is to be used to distribute video content described in the cash control information, is described. If the content playback terminal makes a distribution request for the distribution control information added with an identifier of video content which is added to the cash control information, and if the distribution method controller receives from a plurality of content playback terminals around the same time, distribution requests for the same video content described in the cash control information, the distribution method controller is configured to generate distribution control information in which a distribution method for the video content is set to be the multicast protocol, transmit the distribution control information to the plurality of content playback terminals, and distribute the video content by the multicast protocol.

(5) Regarding the content distribution system according to the one aspect of the present invention, if the data distributor sets a bit rate for distribution by the unicast protocol from the content distribution device to the content playback terminal to be higher than a bit rate for distribution by the multicast protocol from the content distribution device to the content playback terminal, and if the data distributor receives distribution requests for the same video content from a plurality of content playback terminals to which the distribution menu has been distributed around the same time, the distribution method controller is configured to transmit to the plurality of content playback terminals having made the distribution requests for the same video content, distribution control information in which a distribution method for video content is set to be the unicast protocol, and distribute by the unicast protocol the video content to each of the plurality of content playback terminals. Additionally, the distribution method controller is configured to change the distribution method for a reference content playback terminal that is the content playback terminal for which distribution of video content has progressed the most, from the unicast protocol to the multicast protocol. If distribution to a content playback terminal to which the same video content is being distributed caches up with the distribution to the reference content playback terminal, the distribution method controller is configured to change the distribution method for the distribution of the video content to the catching content playback terminal, from the unicast protocol to the multicast protocol.

(6) Regarding the content distribution system according to the one aspect of the present invention, the content playback terminal further includes a distribution method controller configured to add to the cash control information, an identifier of distribution control information associated with video content, and a distribution start time for the distribution control information. If the data transmission and reception unit receives cash control information, the data transmission and reception unit is configured to make a distribution request for the distribution control information at the distribution start time added to the cash control information, receive the video content for which the distribution request is made based on the distribution control information received, and write and store the video content received in the temporal storage unit.

(7) The present invention is a content distribution device to be used in a content distribution system in which the content distribution device performs on-demand distribution of video content to a content playback terminal via a network. The content distribution device includes: a storage unit configured to store menu information including a list of a plurality of video contents; and a data distributor configured to add cache control information to the menu information and distribute the video content, the cache control information including distribution control information in which video content and a method of distributing the video content are described.

(8) Additionally, one aspect of the present invention is a content playback terminal to be used in a content distribution system in which a content distribution device performs on-demand distribution of video content to the content playback terminal via a network. The content playback terminal includes: a display unit; a temporal storage unit; a video content playback unit configured to cause the display unit to display menu information and the video content, the menu information including a list of a plurality of video contents; a browser unit configured to add identification information of video content to a distribution request and transmit the distribution request to the video content distribution device, the identification information being selected on the distribution menu displayed on the display unit; and a data transmission and reception unit configured to request from the content distribution device, video content selected from the menu information, if the cache control information is not added to the menu information, and the data transmission and reception unit being configured to add information indicating the distribution control information to a distribution request for video content included in the cache control information if the cache control information is added to the menu information, transmit the distribution request to the content distribution device, and write into the temporal storage unit, the video content distributed in response to the distribution request.

(9) Additionally, one aspect of the present invention is a content distribution method for a content distribution system in which a content distribution device performs on-demand distribution of video content to a content playback terminal via a network. The content distribution method includes: a step for a storage unit included in the content distribution device to store menu information including a list of a plurality of video contents; a step for a data distributor included in the content distribution device to add cache control information to the menu information and distribute the video content, the cache control information including distribution control information in which video content and a method of distributing the video content are described; a step for a video content playback unit included in the content playback terminal to cause a display unit included in the content playback terminal to display the menu information and the video content; a step for a browser unit included in the content playback terminal to add identification information of video content to a distribution request and transmit the distribution request to the video content distribution device, the identification information being selected on the distribution menu displayed on the display unit; and a step for a data transmission and reception unit included in the content playback terminal to request from the content distribution device, video content selected from the menu information, if the cache control information is not added to the menu information, and the data transmission and reception unit being configured to add information indicating the distribution control information to a distribution request for video content included in the cache control information if the cache control information is added to the menu information, transmit the distribution request to the content distribution device, and write into the temporal storage unit, the video content distributed in response to the distribution request.

### Effects of the Invention

The present invention has a merit in that efficient content distribution can be performed while reducing the communication traffic between the content distribution device and the content distribution terminals.

### BRIEF DESCRIPTION OF THE DRAWINGS

FIG. 1 is a block diagram illustrating an example of a configuration of a content distribution system according to a first embodiment of the present invention.
FIG. 2A is a diagram illustrating an example of a structure of menu information used in the first embodiment.
FIG. 2B is a diagram illustrating an example of a structure of cache control information used in the first embodiment.
FIG. 2C is a diagram illustrating an example of a structure of distribution control information used in the first embodiment.
FIG. 3 is a flowchart illustrating an example of operations for a content playback terminal 20 to display a menu to select video content to be requested for distribution.
FIG. 4 is a diagram illustrating an image that a browser 22 displays on a display unit 21 at the time of the menu display operation.
FIG. 5 is a diagram illustrating an image that the browser 22 displays on the display unit 21 at the time of the menu display operation.
FIG. 6 is a flowchart illustrating an example of operations for the content playback terminal 20 to perform, before a user makes a distribution request, cache distribution of video content with respect to a temporal storage device 25 based on cache control information.
FIG. 7 is a flowchart illustrating an example of operations for the content playback terminal 20 to play back the distributed video content.
FIG. 8 is a flowchart illustrating an example of a video content distribution process for a content distribution device 10.
FIG. 9 is a diagram illustrating an example of menu information displayed on the display unit 21 of the content playback terminal 20, the menu information having a structure that attracts a user to video content added to the cache control information.
FIG. 10 is a block diagram illustrating an example of a configuration of a content distribution system according to a second embodiment of the present invention.

### BEST MODE FOR CARRYING OUT THE INVENTION

### [First Embodiment]

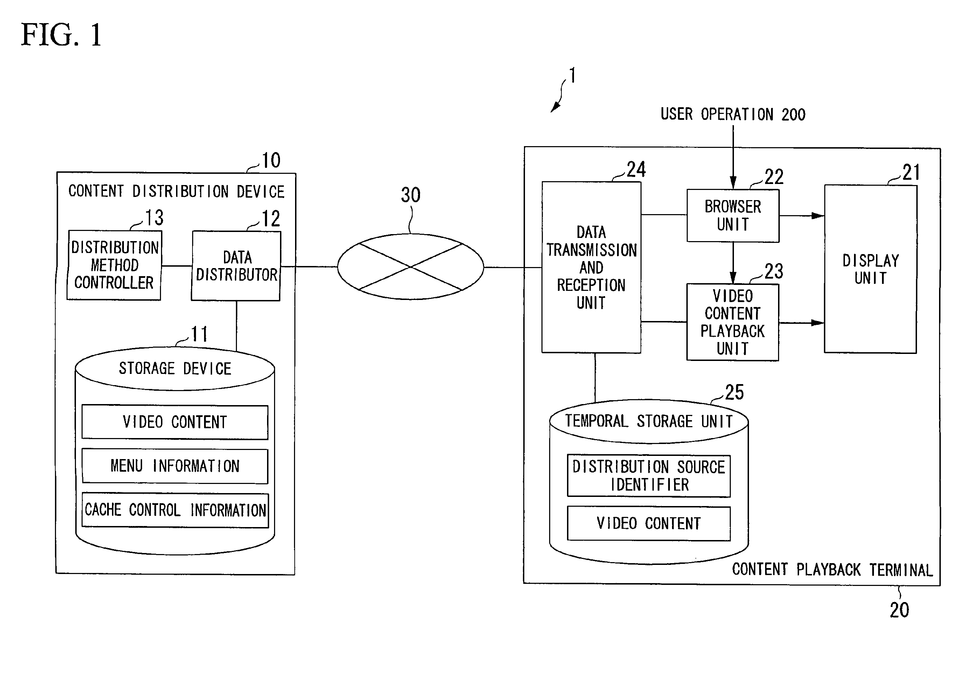

Hereinafter, a first embodiment of the present invention is explained with reference to the drawings. FIG. 1 is a diagram illustrating an example of a configuration of a content distribution system according to the first embodiment. A content distribution system 1 is a system in which a content distribution device 10 distributes, to each content playback terminal 20, video content requested on demand by the content playback terminal 20 (upon receiving a request from a user), via a communication network 30, such as the Internet.
In FIG. 1, the content distribution system 1 includes the content distribution device 10 and the content playback terminal 20. The content distribution device 10 and the content playback terminal 20 are connected via the communication network 30, such as the Internet.
The content distribution device 10 distributes video content requested by the content playback terminal 20 to the content playback terminal 20 having requested the video content.
The content distribution terminal 20 requests from the content distribution device 10, distribution of the video content selected by a user to play back. The content playback terminal 20 displays the distributed video content on a display included in the playback terminal 20.

The content distribution device 10 includes a storage device 11, a data distributor 12, and a distribution method controller 13.
The storage device 11 previously stores various distribution resources to be distributed to the content playback terminal 20, such as menu information for presenting distributable video content, and cache control information to be added to the menu information.
Based on the distribution request transmitted from the content playback terminal 20, the data distributor 12 reads from the storage device 11, a distribution resource (various data, such as video content specified by a user or menu information) of the type requested by the content playback terminal 20. Then, the data distributor 12 distributes the read distribution resource to the content playback terminal 20 having requested the read distribution resource.
The distribution method controller 13 selects a distribution method of distributing data (multicast protocol, unicast protocol) when the data distributor 12 distributes the distribution resource to the content playback terminal 20. Then, the distribution method controller 13 controls the data distributor 12 to perform distribution by the selected distribution method.
Additionally, in response to the video content distribution request, the distribution method controller 13 generates distribution control information indicating which distribution method of the multicast protocol and the unicast protocol to use to transmit the video content to the content playback terminal 20. Then, the distribution method controller 13 distributes the distribution control information to the content playback terminal 20 via the data distributor 12.

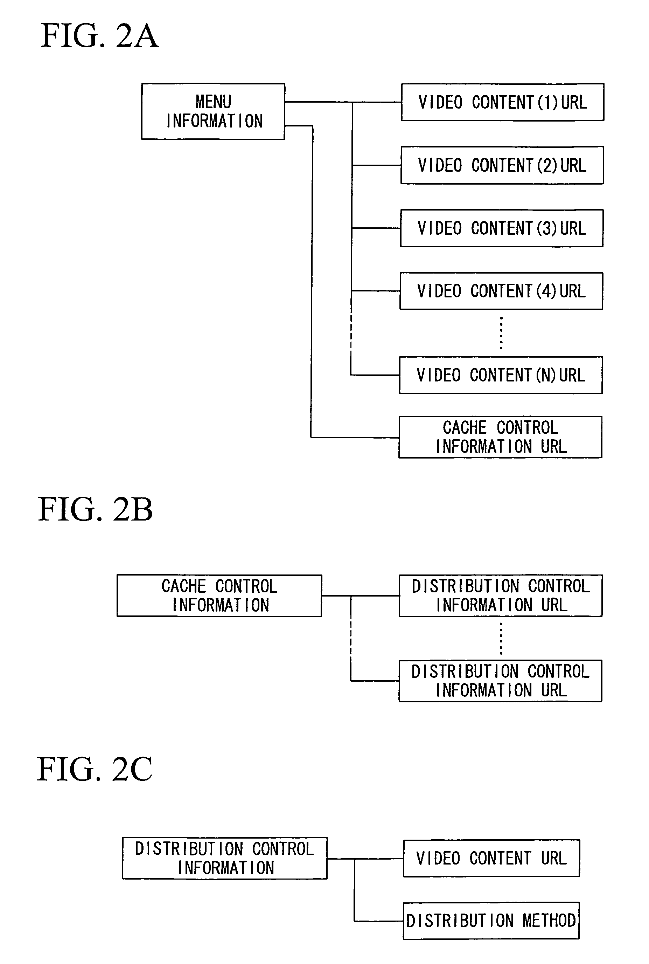

A structure of the aforementioned menu information is explained with reference to the drawings. FIG. 2A is a diagram illustrating an example of the structure of the menu information.
The menu information includes combinations of a character string, video content, and a URL (Uniform Resource Locater as identification information). The character string is the name of the video content for a user to select. The video content includes video content (1), video content (2), video content (3), video content (4), ..., and video content (N). The URL is associated with the character string for each video content.
Additionally, the menu information is added with a URL of cache control information to be subjected to cache distribution that will be explained later. The cache control information indicates video content previously-selected as video content having a high possibility of being played back.
FIG. 2B illustrates an example of a structure of the cache information. As shown in FIG. 2B, the cache control information includes at least one URL of the distribution control information.
FIG. 2C is a diagram illustrating an example of a structure of the distribution control information. As shown in FIG. 2C, a URL of video content, and a distribution method (that will be explained later) to be used when the video content is distributed to the content playback terminal 20, are described in the distribution control information. The video content described in the distribution control information is any one or more pieces of video content described in the menu information.

With reference back to FIG. 1, the content playback terminal 20 includes: a display unit 21; a browser unit 22; a video content playback unit 23; a data transmission and reception unit 24; and a temporal storage device (cache) 25.
The data transmission and reception unit 24 transmits to the content distribution device 10, a distribution request for a distribution resource received from a user via the browser unit 22 (user operation 200). The data transmission and reception unit 24 receives the distribution resource distributed from the content distribution device 10 in response to the distribution request.
The browser unit 22 is configured to be compatible with an HTML document. The browser unit 22 displays on the display unit 21, menu information in HTML format supplied via the data transmission and reception unit 24.
Additionally, if the user selects from a selection screen, menu information for each genre of video content, which is displayed on the display unit 21, the browser unit 22 detects the menu information selected from the selection screen, and outputs to the data transmission and reception unit 24, a distribution request for the detected menu information while adding a URL of the menu information to the distribution request.

Additionally, if the user selects the name of video content from the menu information displayed on the display unit 21, the browser unit 22 detects video content selected from the menu information, and outputs to the video content playback unit 23, a playback request for the detected video content while adding a URL of the video content to the playback request.
The video content playback unit 23 transmits to the content distribution device 10 via the data transmission and reception unit 24, a distribution request for the video content along with the URL of the video content requested to play back (on-demand distribution that will be explained later).
If the URL of the cache control information is added to the distributed menu information, the data transmission and reception unit 24 makes a distribution request for cache control information to the content distribution device 10. Based on the distribution control information added to the obtained cache control information, the data transmission and reception unit 24 receives distribution of the video content from the content distribution device 10 (cache distribution).
The temporal storage device 25 stores video content pieces distributed from the content distribution device 10, and distribution source identifiers each identifying video content (for example, a URL indicating an access destination for the video content), while the video content pieces and the distribution source identifiers are correlated to one another.

In the first embodiment, there are two video content distribution processes performed by the content distribution device 10, which are the following on-demand distribution and cache distribution.

### · On-Demand Distribution

The on-demand distribution is an on-demand video content distribution method in which a user selects video content from menu information displayed on the display unit 21, and then the browser unit 22 makes a distribution request for the selected video content.

### · Cache Distribution

The cache distribution is a distribution method of preliminarily distributing, prior to a video content distribution request made by user operation, based on cache control information referred to by the menu information distributed by the content distribution device 10, video content having a high possibility of being played back which is indicated by the cache control information.

Regarding the cache distribution, which is different from the on-demand distribution invoked by a user operation for the distribution request, video content having a high playback possibility, which is indicated by the cache control information referred to by the menu information distributed by the content distribution device 10, is preliminarily distributed before a user makes a distribution request by selecting video content from the menu information. Regarding the cache distribution, at the time of the distribution of the video content, the content distribution device 10 multicasts, by the multicast protocol, the video content to multiple content playback terminals 20 to which menu information has been distributed around the same time (for several minutes to several ten minutes), before a user selects video content to play back. Consequently, the content distribution system of the first embodiment reduces the communication traffic among the content distribution device 10 and the multiple content playback terminals 20.

Additionally, explanations regarding the content distribution system of the first embodiment are given here with respect to a case in which the menu information is provided as an HTML document. However, any other data format, such as a BML (Broadcast Markup Language) document or an XML (eXtensible Markup Language) document, may be used as long as the reference relationship among distribution resources as explained above can be described in the other format. In this case, a browser compatible with the aforementioned data format is used as the browser unit 22 of the content playback terminal 20.

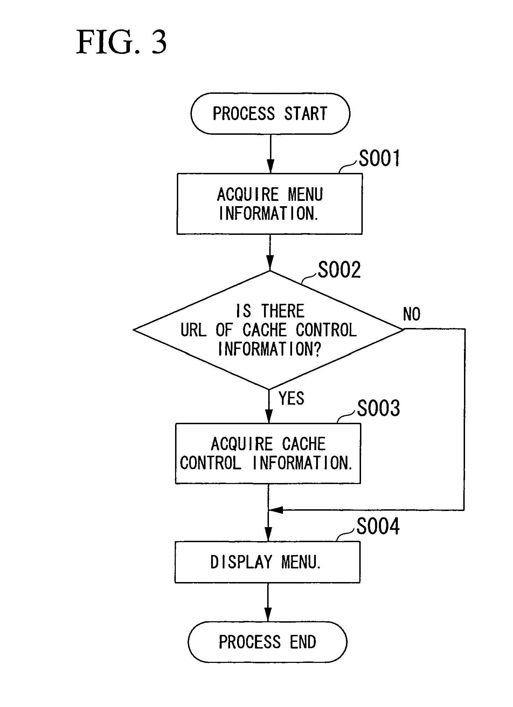

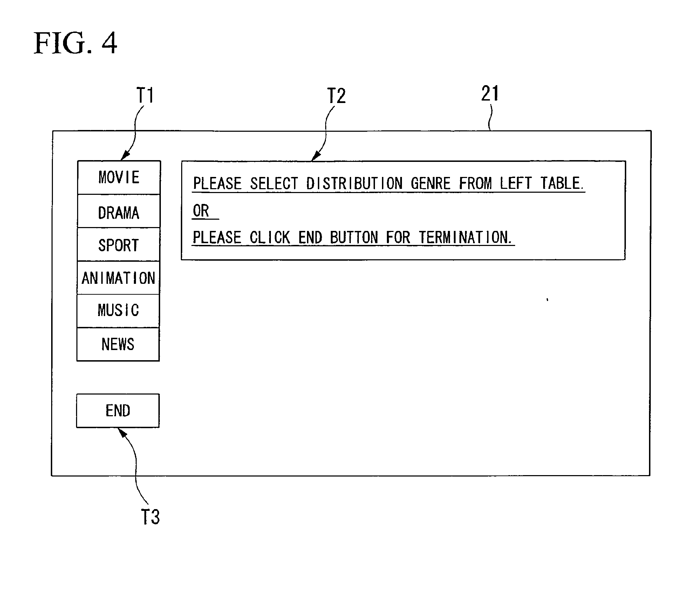

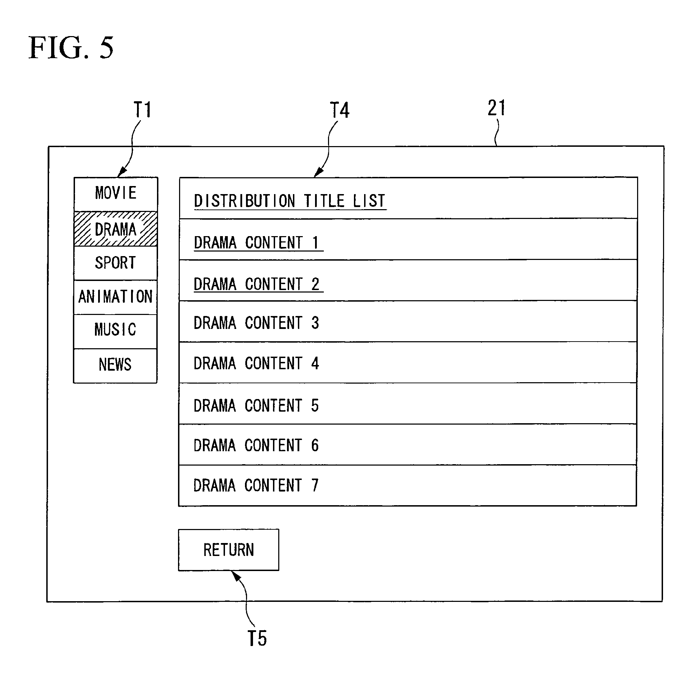

Next, operations for the content playback terminal 20 in the content distribution system of the first embodiment to display a menu are explained with reference to the drawings. FIG. 3 is a flowchart illustrating an example of operations for the content playback terminal 20 to display a menu to select video content to be requested for distribution. FIGS. 4 and 5 are diagrams illustrating images for the browser unit 22 to display on the display unit 21 at the time of the menu display operations.

### Step S001:

If a user invokes an application for video distribution/playback, the browser unit 22 causes the display unit 21 to display a selection screen shown in FIG. 4.
A long table T1 on the left side of the screen is a genre selection menu to select menu information in which video content to be requested for distribution is described, according to genres such as movies, dramas, or sports, as shown in FIG. 4.
On a table T2 on the upper part of the screen, a character string for inducing to select a distribution genre of video content from the genre selection menu is displayed. Additionally, a character string for explaining operation for termination is also displayed.
Further, a button T3 on the bottom left of the screen is a button for the browser unit 22 to terminate the application for video distribution/playback upon a user clicking the button.
For example, the URL of the menu information associated with the button of each genre is previously set in the browser unit 22, as part of the application. For this reason, if a user specifies and clicks by operating a pointing device (hereinafter, simply "click") the "drama" button on the table 1, the browser unit 22 detects that the drama button has been clicked. Then, the browser unit 22 transmits a distribution request including the URL associated with the "drama" button, to the content distribution device 10 via the data transmission and reception unit 24 and the communication network 30, thereby making a distribution request for the menu information regarding the "drama" to the content distribution device 10.
Upon receiving the distribution request from the content playback terminal 20, the data distributor 12 extracts the URL of the menu information included in the distribution request, and reads from the storage device 11, the menu information associated with the URL.
Then, the data distributor 12 distributes the read menu information to the content playback terminal 20 having made the distribution request via the communication network 30.

### Step S002:

Upon receiving the menu information distributed from the content distribution device 10, the data transmission and reception unit 24 determines the presence or absence of the URL of the cache control information referred to by the menu information, in other words, whether or not the URL of the cache control information is added to the menu information.
If the URL of the cache control information is included in the menu information, the data transmission and reception device 24 proceeds to step S003. On the other hand, if the URL of the cache control information is not included in the menu information, the data transmission and reception device 24 proceeds to step S004.

### Step S003:

Upon receiving the menu information distributed from the content distribution device 10, the data transmission and reception device 24 transmits to the content distribution device 10, a distribution request including the URL as the identifier of the cache control information referred to by the menu information, that is, the URL of the cache control information which is added to the menu information.
Upon receiving the distribution request from the content playback terminal 20, the data distributor 12 extracts the URL of the cache control information included in the distribution request, and reads from the storage device 11, cache control information associated with the URL.
Then, the data distributer 12 distributes, via the communication network 30, the read cache control information to the content playback terminal 20 having made the distribution request.

### Step S004:

The browser unit 22 outputs to the display unit 21, the menu information which is distributed from the content distribution device 10 and is provided as an HTML document, as a distribution menu for video content belonging to the genre of "drama." Then, the browser unit 22 causes the display unit 21 to display the menu information as a table T4 on the center of the screen. In the table T4, character strings indicating the names of video content pieces, such as drama content 1, the drama content 2, ..., are displayed below the display of a character string "distribution title list." Additionally, the button T5 is a button to be clicked to return the screen back to the genre selection menu. By the button T5 being clicked, the browser unit 22 detects that the button T5 has been clicked, and performs a display process for returning the screen display shown in FIG. 5 to the screen display shown in FIG. 4, as the process to return to the genre selection menu.
Thereby, the distribution menu for a user to select video content, which shows distribution information according to genre, is displayed on the display unit 21.

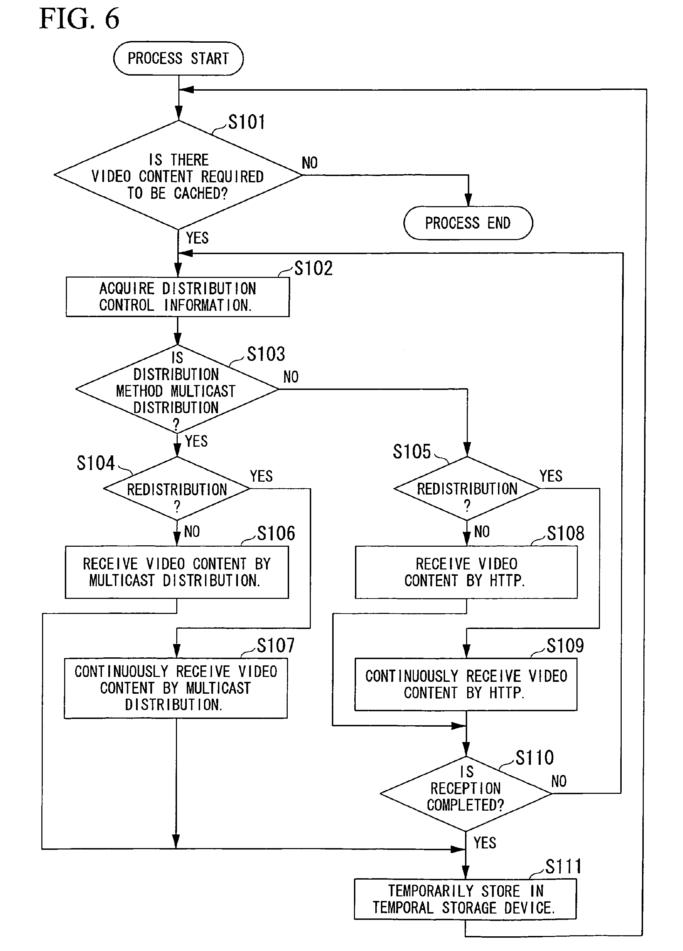

Next, with reference to the drawing, explanation is given with respect to operations of cache distribution in which the content playback terminal 20 in the content distribution system of the first embodiment to receive distribution of video content having a high playback possibility by means of the cache control information and cache (temporarily store) the received video content in the temporal storage device 25, before a user selects from the distribution menu, video content to be requested for distribution. FIG. 6 is a flowchart illustrating an example of operations for the content playback terminal 20 to perform, prior to a user distribution request, cache distribution of video content with respect to the temporal storage device 25. The operations shown in FIG. 6 are the process to be performed if the content playback terminal 20 receives menu information, and the URL of the cache control information is added to the received menu information, that is, the process (process start) to be performed by the application after step S003 of the flowchart shown in FIG. 3.

### Step S101:

Based on the URL of the distribution control information set for each video content, which is described in the cache control information obtained in step S003 of the flowchart shown in FIG. 3, the data transmission and reception unit 24 determines whether or not all the video content pieces referred to by the cache control information are stored in the temporal storage device 25.
The distribution control information is information including a video content distribution method and a URL of the video content. The URL of the distribution control information is stored as a distribution source identifier for identifying video content, in the temporal storage device 25 along with the video content. In the first embodiment, the video content distribution methods include multicast distribution by the multicast protocol and unicast distribution by the unicast protocol that is the HTTP (unicast distribution in which a single address is specified to transmit data to a specific user).
In other words, the data transmission and reception unit 24 compares the URL of the distribution control information stored in the temporal storage device 25 to the URL of the distribution control information described in the cache control information. Based on whether or not all the URLs of the distribution control informations described in the cache control information are present in the temporal storage device 25, the data transmission and reception unit 24 determines whether or not all the video content pieces specified by the cache control information are stored in the temporal storage device 25.
Then, if the data transmission and reception unit 24 detects that a URL of the distribution control information associated with unreceived video content, which is not stored in the temporal storage device 25, the data transmission and reception unit 24 proceeds to step S102. On the other hand, if the data transmission and reception unit 24 detects that all the URLs of the distribution control informations described in the cache control information are stored in the temporal storage device 25 and that the video content pieces associated with the distribution control informations have been already received, the data transmission and reception unit 24 terminates the operations of the cache process.

### Step S 102:

The data transmission and reception unit 24 transmits to the content distribution device 10, a distribution request including the URL indicating the distribution control information associated with the unreceived video content, the distribution control information being included in the cache control information.
The data distributor 12 extracts the URL indicating distribution control information, from the distribution request supplied from the content playback terminal 20. Then, the data distributor 12 reads from the distribution method controller 13, distribution control information generated by the distribution method controller 13 in response to the URL.
Then, the data distributor 12 distributes to the content playback terminal 20, the distribution control information read from the distribution method controller 13.
Then, the data transmission and reception unit 24 receives the distribution control information distributed from the content distribution device 10.

### Step S 103:

The data transmission and reception unit 24 determines whether the distribution method described in the received distribution control information is the multicast distribution by the multicast protocol or the unicast distribution by the HTTP (unicast protocol).
Then, if the distribution method is the multicast distribution, the data transmission and reception unit 24 proceeds to step S104. On the other hand, if the distribution method is the unicast distribution, the data transmission and reception unit 24 proceeds to step S105.

### Step S104:

Based on whether or not a parameter indicating distribution control information in response to a redistribution request is added to the received distribution control information, the data transmission and reception unit 24 determines whether or not the distributed distribution control information is the distribution control information in response to the redistribution request.
Here, if the parameter is not added, the data transmission and reception unit 24 determines that the distribution control information is not for redistribution, and proceeds to step S 106.
On the other hand, if the parameter is added, the data transmission and reception unit 24 determines that the distribution control information is for redistribution, and proceeds to step S107.

### Step S105:

Based on whether or not a parameter indicating distribution control information in response to a redistribution request is added to the received distribution control information, the data transmission and reception unit 24 determines whether or not the distributed distribution control information is the distribution control information in response to the redistribution request.
Here, if the parameter is not added, the data transmission and reception unit 24 determines that the distribution control information is not for redistribution, and proceeds to step S108.
On the other hand, if the parameter is added, the data transmission and reception unit 24 determines that the distribution control information is for redistribution, and proceeds to step S 109.

### Step S 106:

The data transmission and reception unit 24 transmits to the content distribution device 10, a distribution request including the URL of the video content described in the distribution control information and the multicast-protocol-based distribution method.
Then, upon receiving the distribution request from the content playback terminal 20, the data distributor 12 extracts the URL of the video content included in the distribution request, and reads from the storage device 11, the video content associated with the URL.
Since the distribution method described in the distribution request is the multicast distribution by multicast, the data distributor 12 multicasts the read video content to multiple content distribution terminals 20.
The data transmission and reception unit 24 receives, by the multicast protocol, the video content distributed from the content distribution device 10, and proceeds to step S111.

### Step S107:

The data transmission and reception unit 24 receives distribution of the video content at the multicast address of the video content which is added to the distribution method described in the distribution control information. At this time, the data transmission and reception unit 24 receives, by the multicast protocol, video content data having an image number that is greater than the image number indicating the amount of data up to the distributed part of the video content, and proceeds to step S111.
The image number corresponds to the number of received images counted from the time the reception of the video content is initiated. For example, if images in MPEG2 are distributed, the image number corresponds to the GOP number that is the number of received GOP (Group Of Pictures) counted from the time the reception of video content is initiated.

### Step S 108:

The data transmission and reception unit 24 transmits to the content distribution device 10, a distribution request including the URL of the video content described in the distribution control information and the unicast-protocol-based distribution method.
Then, upon receiving the distribution request from the content playback terminal 20, the data distributor 12 extracts the URL of the video content which is included in the distribution request, and reads from the storage device 11, the video content associated with the URL.
Since the distribution method described in the distribution request is the unicast distribution by unicast, the data distributor 12 unicasts the read video content to each of the content distribution terminals 20.
The data transmission and reception unit 24 receives, by the unicast protocol, the video content distributed from the content distribution device 10, and proceeds to step S110.

### Step S109:

The data transmission and reception unit 24 transmits to the content distribution device 10, a video content distribution request including the URL of the video content described in the distribution control information, the unicast-protocol-based distribution method, and information of the GOP number that is the number of received GOP counted from the time the reception of the video content is initiated.
Then, upon receiving the distribution request from the content playback terminal 20, the data distributor 12 extracts the URL of the video content which is included in the distribution request, and reads from the storage device 11, the video content corresponding to the GOP number that is greater than the GOP number indicated by the distribution request.
Since the distribution method described in the distribution request is the unicast distribution by unicast, the data distributor 12 unicasts to the content distribution terminal 20, video content to be distributed after the time indicated by the read content reception information.
The data transmission and reception unit 24 receives by the unicast protocol, the video content to be distributed from the content distribution device 10 after the time indicated by the read content reception information, and proceeds to step S110.

### Step S110:

If the data transmission and reception unit 24 completes the reception of data by HTTP that is the unicast protocol, the data transmission and reception unit 24 proceeds to step S111. On the other hand, if communication is suspended by the content distribution device 10, the data transmission and reception unit 24 returns to step S 102, in which the data transmission and reception unit 24 makes a redistribution request for the distribution control information to the content distribution device 10. Here, the data transmission and reception unit 24 determines whether or not communication is suspended, by detecting that no data is received from the content distribution device 10 for a duration exceeding a predetermined determination duration.
At this time, the data transmission and reception unit 24 distributes to the content distribution device 10, a distribution request including the URL of the distribution control information and a parameter that specifies whether the distribution request for the distribution control information which is made to the content distribution device 10 is an initial distribution request or a redistribution request.
This parameter is information indicating the number of distribution requests having been made from the content playback terminal 20, if a redistribution request is made. Additionally, as long as this parameter is information enabling detection that distribution control information is distributed in response to a redistribution request, a flag to be set in the case of the redistribution request may be used instead of the aforementioned number of distribution requests.

### Step S111:

The data transmission and reception unit 24 stores the received video content in the temporal storage device 25. At the same time, the data transmission and reception unit 24 stores in the temporal storage device 25, the URL of the distribution control information associated with the video content, which indicates the distribution source of the received video content, and the URL of the video content, while correlating the URL of the distribution control information and the URL of the video content to the received video content, and then proceeds to step S 101.

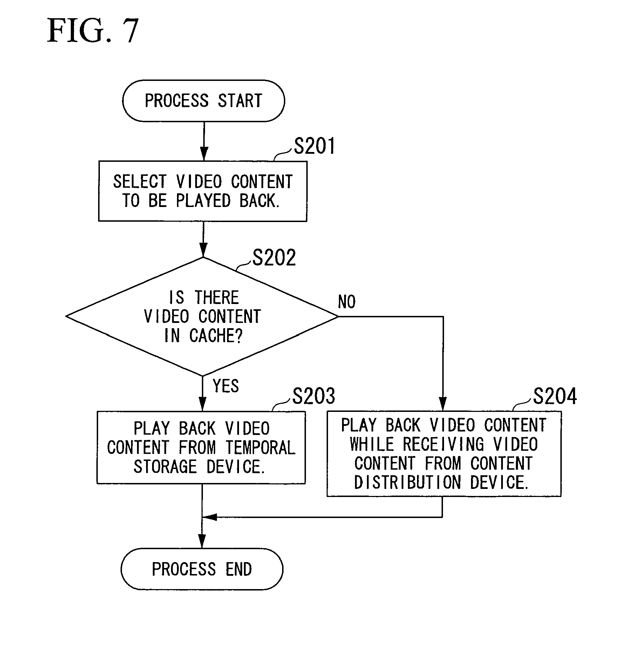

Next, operations for the content playback terminal 20 in the content distribution system of the first embodiment to play back the distributed video content are explained here. FIG. 7 is a flowchart illustrating an example of operations for the content playback terminal 20 to play back the distributed video content.

### Step S201:

A user selects, by clicking, any video content from the menu of video content displayed on the display unit 21.
If the selection by clicking is made, the browser unit 22 detects the video content selected by the user, for example, detects that "drama content 1" is selected as the video content.
Then, the browser unit 22 reads the URL of the "drama content 1" from the menu information, and outputs to the video content playback unit 23, a playback request for the "drama content 1" to which the read URL of the "drama content 1" is added
Upon receiving the playback request from the "drama content 1," the video content playback unit 23 outputs the URL of the "drama content 1" to the data transmission and reception unit 24, requests the data transmission and reception unit 24 to obtain the data of "drama content 1" (video content) indicated by the URL, and proceeds to step S202.

### Step S202:

The data transmission and reception unit 24 performs a search process of comparing the URL of the video content stored in the temporal storage device 25 together with the URL of the distribution control information of the video content to the URL of the "drama content 1" supplied from the video content playback unit 23. Thereby, the data transmission and reception unit 24 detects whether or not the "drama content 1" is stored in the temporal storage device 25.
Then, if the URL of the video content identical to the URL of the "drama content 1" is stored in the temporal storage device 25 as a result of the search process, the data transmission and reception unit 24 determines that the video content has already been received by the cache distribution, and proceeds to step S203.
On the other hand, if the URL of the video content identical to the URL of the "drama content 1" is not detected from among the URLs of video content pieces stored in the temporal storage device 25 as a result of the search process, the data transmission and reception unit 24 determines that the video content has not yet been received by the cache distribution, and proceeds to step S204.

### Step S203:

The data transmission and reception unit 24 reads from the temporal storage unit 25, the video content stored while being associated with the URL identical to the URL of the "drama content 1," and outputs the read video content to the video content playback unit 23.
Upon receiving the video content, the video content playback unit 23 performs a playback process of displaying the supplied video content on the display unit 21, and terminates the playback process when the playback of the video content is completed.

### Step S204:

The process in this step is performed by the unicast protocol.
The data transmission and reception unit 24 transmits to the content distribution device 10, a distribution request including the URL of the "drama content" supplied from the video content playback unit 23.
Then, the data distributor 12 refers to the URL of "drama content 1" supplied from the content playback terminal 20, and thereby reads the video content ("drama content 1") from the storage device 11. Then, the data distributor 12 distributes the read video content to the content playback terminal 20.
Then, the video content playback unit 23 performs a playback process of displaying the video content supplied from the data transmission and reception unit 24, and terminates the playback process when the playback of the video content is completed.

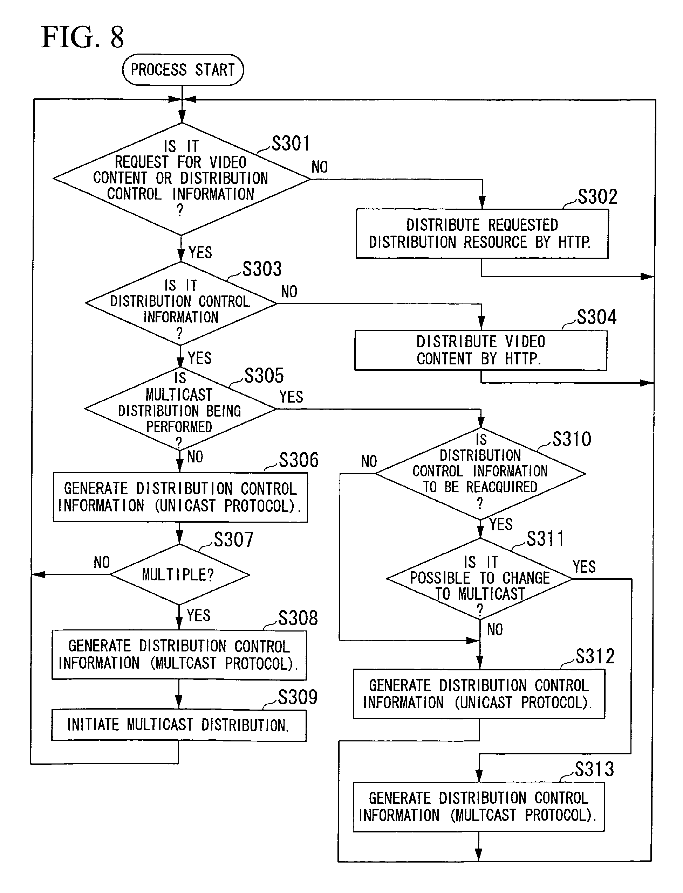

Next, operations for the content distribution device 10 in the content distribution system of the first embodiment to distribute video content are explained here. FIG. 8 is a flowchart illustrating an example of a video content distribution process by the content distribution device 10.

### Step S301:

The data distributor 12 determines which of video content and distribution control information the distribution request received from the content playback terminal 20 requests as a distribution resource. This determination is made by, for example, detecting a flag indicating the type of distribution resource to be requested, which is included in the distribution request.
Here, if the distribution request information received from the content playback terminal 20 indicates a distribution request for video content or distribution control information as a distribution resource, the data distributor 12 proceeds to step S303.
On the other hand, if the distribution resource requested by the distribution request received from the content playback terminal 20 is neither video content nor distribution control information, the data distributor 12 proceeds to step S302.

### Step S302:

The data distributor 12 extracts the URL from the distribution request received from the content playback terminal 20, and reads from the storage device 11, a distribution resource (any of the menu information and cache control information) associated with the URL.
Then, the data distributor 12 distributes the read distribution resource to the content playback terminal 20 by the unicast protocol that is HTTP, and proceeds to step S301.

If the data distribution request from the content playback terminal 20 indicates a request for the distribution control information (in the case of cache distribution of video content), the data distributor 12 proceeds to step S305. If the data distribution request from the content playback terminal 20 indicates a request for video content, the data distributor 12 proceeds to step S304.

### Step S304:

Upon receiving the distribution request for video content by HTTP, the data distributor 12 reads the video content associated with the URL from the storage device 11, and unicasts the read video content to the content playback terminal 20 (step S304).

### Step S305:

The data distributor 12 determines whether or not the video content associated with the URL of the video content which is described in the distribution control information requested by the content playback terminal 20 has been multicast.
Here, the data distributor 12 determines whether or not the distribution is the multicast distribution, based on whether or not the multicast distribution flag is set. This multicast distribution flag is set to each video content stored in the storage device 11. If the multicast distribution has been performed, the flag is set. If distribution has been performed only by the unicast protocol or if no content has been distributed, the flag is not set.
At this time, if the video content described in the distribution control information has not been multicast, the data distributor 12 proceeds to step S306. If the video content described in the distribution control information has been multicast, the data distributor 12 proceeds to step S310.

### Step S306:

The distribution method controller 13 generates distribution control information in which the video content distribution method is set to be the HTTP-based distribution method with the unicast protocol. Then, the distribution method controller 13 transmits the generated distribution control information to the content playback terminal 20 having performed the data distribution.

### Step S307:

The distribution method controller 13 determines whether or not distribution by HTTP of the same video content to multiple content playback terminals 20 is initiated within a predetermined time range (for example, several minutes to several ten minutes) including the previous step S306.
Here, the distribution method controller 13 detects whether or not two or more pieces of the same video content are included in the video content pieces having been distributed by HTTP, based on whether the number of the content playback terminals 20 that are the distribution destination, which the distribution method controller 13 has counted for each video content, is one or more.
If the same video content has been distributed to multiple content playback terminals 20, the distribution method controller 13 proceeds to step S308. On the other hand, if the same video content has not been distributed to multiple content playback terminals 20 (i.e., if the same video content has been distributed to only one content playback terminal 20), the distribution method controller 13 transmits to the content playback device having made the data distribution request, the generated distribution control information to which the unicast-protocol-based distribution method is set, and proceeds to step S301.
The data distributor 12 distributes the cache control information having the same contents, which is previously set to the storage device 11, to the content playback terminals 20 having made the data distribution request for the video menu around the same time (for several minutes to several ten minutes, similarly to the above time range). For this reason, the multiple content playback terminals 20 receives the distributed cache control information having the same contents, and thereby transmit data distribution requests for the same video content.

### Steps S308 and S309:

The distribution method controller 13 has counted the number of transmitted images, for each content playback terminal 20 to which the video content has been transmitted by the HTTP (unicast protocol). The distribution method controller 13 detects, from among the content playback terminals 20 to which the same video content has been distributed, the content playback terminal 20 for which distribution of the video content data has been furthered the most (i.e., the number of transmitted images is the greatest). Then, the distribution method controller 13 transmits to the detected content playback terminal 20, distribution control information in which the distribution method is changed to the multicast protocol and which includes a multicast address associated with the video content, irrespective of whether a distribution request for distribution control information is made from that content playback terminal 20.
Consequently, the data transmission and reception unit 24 of the content playback terminal 20, which receives the distribution control information including the distribution method changed to the multicast protocol, changes the reception method from the unicast protocol to the multicast protocol, and thus receives, by the multicast protocol, distribution of the video content at the set multicast address. From this time, the multicast distribution from the content distribution device 10 to the content playback terminals 20 is initiated. Additionally, the data distributor 12 suspends the distribution of the video content to the content playback terminal 20 to which the video content is being distributed by the unicast protocol even after the multicast distribution has been initiated, in order to cause that content playback terminal 20 to re-request the distribution control information. In this case, the data distributor 12 has counted the number of images of the distributed video content for each of the content playback terminals 20 to which the video content is being distributed by the unicast protocol. From among the content playback terminals 20, the data distributor 12 detects the content playback terminal 20 for which the number of distributed images exceeds the number of distributed images of the same video content which is being multicast by the multicast protocol. Then, the data distributor 12 suspends transmission of the video content to the detected content playback terminal 20.

### Step S310:

The data distributor 12 detects whether or not the data distribution request for distribution control information is reacquisition, based on whether or not a parameter indicating the number of times of the redistribution requests is added.
At this time, if the distribution request for distribution control information is reacquisition, the data distributor 12 proceeds to step S311. If the distribution request for distribution control information is not reacquisition, the data distributor 12 proceeds to step S312.

### Step S311:

The distribution method controller 13 determines whether or not the distribution method for the video content being unicast can be changed to the multicast distribution.
Firstly, the distribution method controller 13 determines whether or not the video content associated with the distribution control information requested for redistribution has been multicast, based on whether or not the multicast distribution flag is set.
Additionally, the distribution method controller 13 determines whether or not the data distribution of video content to the content playback terminal 20 having made the redistribution request catches up with the data distribution to the content playback terminal 20 for which the distribution method has been changed to the multicast distribution in the earliest timing.
Here, for example, to control the playback speed added to the video content, the distribution method controller 13 compares the number of images received by each content playback terminal 20 between the content playback terminal 20 for which the distribution method has been changed to the multicast distribution in the earliest timing and the content playback terminal 20 having made the redistribution request.
Then, the distribution method controller 13 detects that the data distribution of video content to the content playback terminal 20 having made the redistribution request has caught up with the content playback terminal 20 for which the distribution method had been changed to the multicast distribution in the earliest timing, based on the fact that the number of images distributed to the content playback terminal 20 having made the redistribution request is the greatest, that is, exceeds the number of images distributed to the content playback terminal 20 for which the distribution method has been changed to the multicast distribution in the earliest timing.
If the multicast distribution flag is set for the video content associated with the distribution control information having been redistributed, and if the data distribution of the video content to the content playback terminal 20 having made the redistribution request has caught up with the distribution to the content playback terminal 20 for which the distribution method has been changed to the multicast distribution in the earliest timing, the distribution method controller 13 proceeds to step S313.
On the other hand, if the multicast distribution flag is not set for the video content associated with the distribution control information having been redistributed, and if the data distribution of the video content to the content playback terminal 20 having made the redistribution request has not caught up with the distribution to the content playback terminal 20 for which the distribution method has been changed to the multicast distribution in the earliest timing, the distribution method controller 13 proceeds to step S312.
In the first embodiment, the data distributor 12 sets the speed of the bit rate for the data transmission by unicast distribution to be faster than that for the data transmission by the multicast distribution. In other words, the data distributor 12 sets the bit rate for distribution by the unicast protocol from the content distribution device 40 to the content playback terminal 20 to be higher than the bit rate for distribution by the multicast protocol from the content distribution device 40 to the content playback terminal 20.

### Step S312:

In response to the distribution request for the distribution control information, the distribution method controller 13 sets the distribution method for the video content requested for distribution to be the unicast protocol, and transmits to the content playback terminal 20, the distribution control information in which that distribution method is described.

### Step S313:

In response to the distribution request for the distribution control information, the distribution method controller 13 sets the distribution method for the video content requested for distribution to be the multicast protocol, and transmits to the content playback terminal 20, the distribution control information in which that distribution method is described.

As explained above, the content distribution system of the first embodiment has two video-content distribution processes, which are the on-demand distribution to receive distribution of video content by user operation and the cache distribution to receive distribution of video content having a high playback possibility based on cache control information distributed by the content distribution device 10. Here, the cache distribution is preliminarily performed by the content distribution device 10 before an on-demand video content playback request is made by a user operation.
The cache distribution is a preliminary distribution in which the content playback terminal 20 requests, using cache control information, video content from the content distribution device 10, irrespective of user control, and then receives distribution of the requested video content.
Therefore, the cache distribution is performed by all the content playback terminals 20 irrespective of user operation, thereby enabling distribution requests for the same video content to be made around the same time. Then, the same requested video content requested around the same time is multicast by the multicast protocol to the content playback terminals 20, thereby preventing an increase in the communication traffic, and therefore enabling efficient distribution of video content.

To reduce the communication traffic, it is necessary for the video content specified by the cache control information preliminarily distributed to be played back at a high possibility.
For this reason, it is important to specify, in the cache control information, video content having a high possibility of being played back, such as popular video content. For this reason, the content playback number of times is counted periodically, and video content, for which the playback number of times is statistically great, is added to the cache information.
Additionally, as a method of inducing a user to select video content described in the cache control information from multiple video content pieces on the distribution menu, there is a method of specifying, by the cache control information, video content having a high possibility of being selected by a user, such as video content for which the distribution number of times is great or newly released video content, distribution of which has recently been initiated.

Further, as a method of easily inducing a user to select video content added to the cache control information, it is possible to configure the screen of the distribution menu displayed on the display unit 21 so that a user is likely to select the video content added to the cache control information, that is, a user is attracted to the video content added to the cache control information.

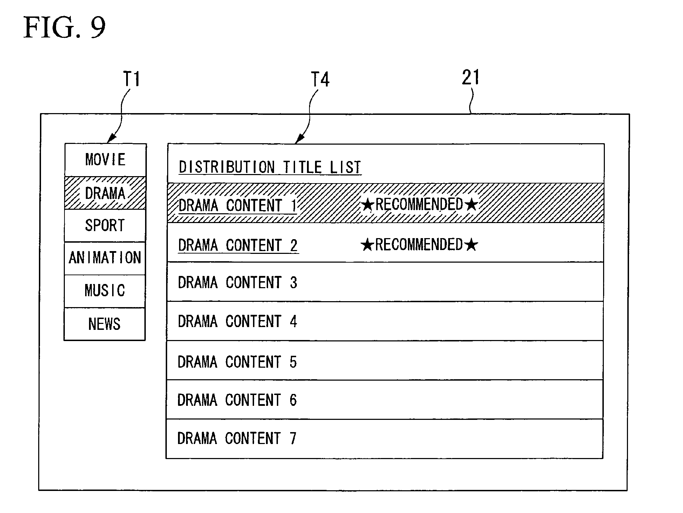

FIG. 9 is a diagram illustrating an example of menu information displayed on the display unit 21 of the content playback terminal 20, which has a configuration that attracts a user to the video content added to the cache control information. Regarding the display of the menu information shown in FIG. 9, a list of "drama content 1" to "drama content 7" is displayed as distribution titles of video content pieces belonging to the genre of "drama." By the position of the display of each distribution title being clicked, the browser unit 22 detects the clicked distribution title, and outputs to the video content playback unit 23, a control signal that causes the video content having the distribution title to be played back.
Then, the video content selected by the user is subjected to the aforementioned playback process from steps S201 to S204.

If a list of multiple video content pieces is displayed as shown in FIG. 9, the video content listed closer to the top of the list further attracts user attention and has the higher possibility of being played back. For this reason, in the case of the display structure shown in FIG. 9, it can be considered that the "drama content 1" listed at the top of the table T4 has the highest possibility of being played back, and the "drama content 7" listed at the bottom of the table T4 has the lowest possibility of being played back.
Additionally, if the video content pieces, which are described in the cache control information and which are preliminarily cached to the temporal storage device 25 of the content playback terminal 20, are the "drama content 1" and the "drama content 2" in the case of FIG. 9, it is possible to arrange the "drama content 1" and the "drama content 2" at the top of the aforementioned table T4, and to add decoration thereto in order to attract user attention.

For example, the distribution title of the video content intended to attract user attention is underlined or is added with a decoration such as a character string "RECOMMENDED," thereby making the display of the video content more visually-emphasized than any other video content not described in the cache control information. In the case of FIG. 9, as an example, "RECOMMENDED" is added to the "drama content 1" and the "drama content 2." Thus, a decoration or the like is added to video content intended to attract user attention, thereby further emphasizing the display of the video content on the menu compared to any other video content.
Consequently, it can be considered that the video content intended to attract user attention is likely to attract user attention, and increases a possibility of being selected by the user, thereby increasing a playback possibility, that is, the possibility of the video content being played back by the user.

In the table T4 showing the list of video content pieces, the video content intended to attract attention is arranged at the top or close to the top of the list, or is added with a decoration to be emphatically displayed. Thereby, the video content, for which a menu is displayed so as to attract user attention, is described in the cache control information to induce a user to refer thereto, thereby increasing the playback possibility of the video content referred to by the cache control information. Accordingly, the same video content can be multicast to multiple content playback terminals 20, thereby reducing the communication traffic for distribution of video content.

Additionally, instead of determining, based on the screen structure of the distribution menu, only video content added with a decoration to attract a user as the video content to be referred to by the cache control information, video content determined as having a high playback possibility based on other criteria, such as video content for which the distribution number of times is great or newly released content having recently distributed, may be referred to by the cache control information.
Consequently, the video content corresponding to the great distribution number of times or the newly released video content is displayed or arranged on the menu information so as to attract user attention, as explained above. Thereby, it is possible to make a structure that further increases the playback possibility of the video content which is described in the cache control information and which is preliminarily subjected to the cache distribution, and thereby further reduces the communication traffic.

### [Second Embodiment]

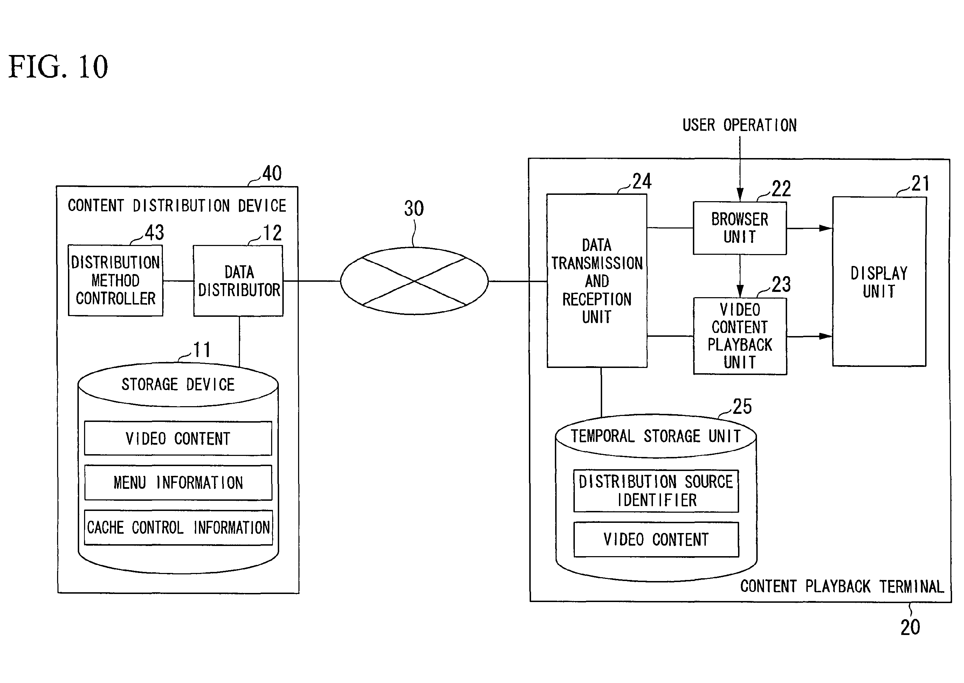

Hereinafter, a second embodiment of the present invention is explained with reference to the drawings. FIG. 10 is a diagram illustrating an example of a configuration of a content distribution system according to the second embodiment. In FIG. 10, the content distribution system includes a content distribution device 40 and the content playback terminal 20. The content distribution device 40 and the content playback terminal 20 are connected via the communication network 30, such as the Internet.
The content distribution device 40 includes the storage device 11, the data distributor 12, and a distribution method controller 43.
The content playback terminal 20 includes the display unit 21, the browser unit 22, the video content playback unit 23, the data transmission and reception unit 24, and the temporal storage device 25.
The content distribution device 40 differs from the content distribution device 10 of the first embodiment in that a distribution method controller 43 that is a constituent element of the content distribution device 40 is included. However, the data distributor 12 and the storage device 11, which are other constituent elements of the content distribution device 40, are the same as those of the content distribution device 10 of the first embodiment. For this reason, the same reference numerals as those of the first embodiment are appended to the respective constituent elements, and explanations thereof are omitted here.

It has been explained in the first embodiment that the data distributor 12 distributes to each content playback terminal 20, cache control information previously stored in the storage 11 of the content distribution device 10.
On the other hand, in the second embodiment, cache control information is dynamically generated according to the timing of distribution of the cache control information, and the generated cache control information is distributed. Thereby, the playback probability of the video content subjected to the cache distribution can be increased compared to that in the first embodiment, thereby further reducing the communication traffic.
As specific operations, when the content distribution device 40 receives a video content distribution request from the content playback terminal 20, the distribution method controller 43 describes in the cache control information, distribution control information associated with video content to be distributed immediately after multicast distribution by the multicast protocol is initiated, in preference to distribution control information associated with any other video content to be distributed at any time other than the time immediately after the multicast distribution is initiated.

Then, there is a higher possibility that the content playback terminal 20 receiving the cache control information will perform the cache process on the video content distributed immediately after the multicast transmission is initiated. Consequently, the amount of video content data to be distributed by HTTP is reduced, that is, the data distributor 12 can distribute the same video content to more content playback terminals, thereby enabling a reduction in the communication traffic.

Additionally, if the time to initiate distribution of distribution control information for each video content which is included in the cache control information is described together with the URL of the distribution control information for each video content, many content playback terminals 20 make distribution requests for distribution control information around the same time. Also in this case, the same video content can be distributed to more content distribution terminals 20, thereby enabling a reduction in the communication traffic from the content distribution device 10 to the content playback terminals 20.
As a specific operation, upon receiving cache distribution, each of the content playback terminals 20 acquires distribution control information according to the aforementioned time to initiate the multicast distribution. Thereby, distribution requests for the same video content can be made by the content playback terminals 20 to the content distribution device 40 around the same time, thereby enabling a reduction in the communication traffic compared to the case in which video content is distributed by HTTP individually to each of the content playback terminals 20.

In the aforementioned first and second embodiments, separately from the on-demand distribution by user operation, the content distribution device preliminarily distributes, based on the cache control information to be distributed, video content having a high playback possibility before a playback request is made by user operation.
According to this configuration, in the first and second embodiments, the preliminary distribution of video content based on the cache control information is performed for all the content playback terminals connected to the network, irrespective of user operation. For this reason, distribution requests for the same video content can be made around the same time. Therefore, the same video content can be multicast by the multicast protocol to multiple content playback terminals, thereby achieving efficient distribution while reducing the communication traffic among the content distribution device and the content playback terminals.

Additionally, it has been explained in the first and second embodiments that the data transmission and reception unit 24 of the content playback terminal 20 caches video content based on information of the video content described in the received cache control information.
Instead of the cache control information of the first and second embodiments, however, the content playback terminal 20 may receive from the content distribution device 10, a program, such as ECMA (European Computer Manufacture Association) Script, Java (registered trademark), or Java applet, which can be executable by the browser unit 22 compatible with the HTML description. Then, the data transmission and reception unit 24 may store the video content specified by the program into the temporal storage device 25. Thus, it is possible to perform cache control using a program such as the ECMA-Script or the Java (registered trademark).

Further, explanations have been given in the first and second embodiments with respect to the case in which the content distribution device 10 and the content playback terminal 20 are connected via the single network.
However, each of the content distribution device 10 and the content playback terminal 20 may be configured to include multiple network interfaces. In this case, content distribution by HTTP may be performed via the Internet protocol network connected via Ethernet (registered trademark). On the other hand, video content distribution by multicast distribution may be performed via a digital broadcast network, such as ISDB-T (Integrated Services Digital Broadcasting-Terrestrial), or DVB-T (Digital Video Broadcasting-Terrestrial).

Additionally, a computer-readable recording medium may store a program for implementing each of the functions of the data distributor 12, the distribution method controller 13, the browser unit 22, the video content playback unit 23, and the data transmission and reception unit 24, which are shown in FIG. 1, so that a computer system reads and executes the program stored in the recording medium to perform the video content distribution process or the video content playback process. Here, the "computer systems" include an OS and hardware, such as a peripheral device.

Further, the "computer systems" include home page provision environments (or display environments) as long as a WWW system is used.
Moreover, the "computer-readable recording medium" indicates a storage device, which includes a portable medium such as a flexible disc, a magneto-optical disc, a ROM, or a CD-ROM, and a hard disk built in the computer system. Additionally, the "computer-readable recording medium" may include a medium that dynamically stores a program for a short period of time, such as a communication line used when a program is transmitted via a network such as the Internet or a communication line such as a telephone line. Additionally, the "computer readable recording medium" may include a medium that stores a program for a predetermined period of time, such as a volatile memory built in a computer system serving as a server or client when the program is transmitted via a network such as the Internet or a communication line such as a telephone line. Moreover, the program may be a program for implementing part of the aforementioned functions. Further, the program may be a program that can implement the aforementioned functions in combination with a program already recorded in the computer system.

Embodiments of the present invention have been explained above in detail with reference to the drawings. However, the specific configuration is not limited thereto. Various modifications may be made without departing from the scope of the present invention.

### INDUSTRIAL APPLICABILITY

The present invention is suitable to be used for a content distribution system and a content distribution device, and can reduce the communication traffic required for transmitting video content to content playback terminals, compared to the conventional case.

### DESCRIPTION OF REFERENCE NUMERALS

1: content distribution system
10, 40: content distribution device
11: storage device
12: data distributor
13, 43: distribution method controller
20: content playback terminal
21: display unit
22: browser unit
23: video content playback unit
24: data transmission and reception unit
25: temporal storage device
30: communication network

## Claims

1. A content distribution system in which a content distribution device performs on-demand distribution of video content to a content playback terminal via a network,
wherein the content distribution device comprises:
a storage unit configured to store menu information including a list of a plurality of video contents; and
a data distributor configured to add cache control information to the menu information and distribute the video content, the cache control information including distribution control information in which video content and a method of distributing the video content are described, and
the content playback terminal comprises:
a display unit;
a temporal storage unit;
a video content playback unit configured to cause the display unit to display the menu information and the video content;
a browser unit configured to add identification information of video content to a distribution request and transmit the distribution request to the video content distribution device, the identification information being selected on the distribution menu displayed on the display unit; and
a data transmission and reception unit configured to request from the content distribution device, video content selected from the menu information, if the cache control information is not added to the menu information, and the data transmission and reception unit being configured to add information indicating the distribution control information to a distribution request for video content included in the cache control information if the cache control information is added to the menu information, transmit the distribution request to the content distribution device, and write into the temporal storage unit, the video content distributed in response to the distribution request.

2. The content distribution system according to claim 1, wherein the data distributor is configured to perform, in response to a distribution request for video content selected by a user, distribution of the video content from the content distribution device to the content playback terminal by a unicast protocol that is a first distribution method, on the other hand, the data distributor being configured to perform, in response to a distribution request for video content described in the cache control information, distribution of the video content from the content distribution device to the content playback terminal by a multicast protocol that is a second distribution method.

3. The content distribution system according to claim 1 or 2, wherein the menu information includes information to be added to video content described in the cache control information when the video content is displayed as a distribution menu, the information being different from information to be added to another video content.

4. The content distribution system according to claim 2 or 3, wherein the content distribution device further comprises:
a distribution method controller configured to generate the distribution control information in which one of the unicast protocol and the multicast protocol, which is to be used to distribute video content described in the cash control information, is described,
wherein if the content playback terminal makes a distribution request for the distribution control information added with an identifier of video content which is added to the cash control information, and if the distribution method controller receives from a plurality of content playback terminals around the same time, distribution requests for the same video content described in the cash control information, the distribution method controller is configured to generate distribution control information in which a distribution method for the video content is set to be the multicast protocol, transmit the distribution control information to the plurality of content playback terminals, and distribute the video content by the multicast protocol.

5. The content distribution system according to claim 4, wherein if the data distributor sets a bit rate for distribution by the unicast protocol from the content distribution device to the content playback terminal to be higher than a bit rate for distribution by the multicast protocol from the content distribution device to the content playback terminal, and if the data distributor receives distribution requests for the same video content from a plurality of content playback terminals to which the distribution menu has been distributed around the same time, the distribution method controller is configured to transmit to the plurality of content playback terminals having made the distribution requests for the same video content, distribution control information in which a distribution method for video content is set to be the unicast protocol, and distribute by the unicast protocol the video content to each of the plurality of content playback terminals,
the distribution method controller is configured to change the distribution method for a reference content playback terminal that is the content playback terminal for which distribution of video content has progressed the most, from the unicast protocol to the multicast protocol, and
if distribution to a content playback terminal to which the same video content is being distributed caches up with the distribution to the reference content playback terminal, the distribution method controller is configured to change the distribution method for the distribution of the video content to the catching content playback terminal, from the unicast protocol to the multicast protocol.

6. The content distribution system according to claim 2 or 3, wherein the content playback terminal further comprises:
a distribution method controller configured to add to the cash control information, an identifier of distribution control information associated with video content, and a distribution start time for the distribution control information,
wherein if the data transmission and reception unit receives cash control information, the data transmission and reception unit is configured to make a distribution request for the distribution control information at the distribution start time added to the cash control information, receive the video content for which the distribution request is made based on the distribution control information received, and write and store the video content received in the temporal storage unit.

7. A content distribution device to be used in a content distribution system in which the content distribution device performs on-demand distribution of video content to a content playback terminal via a network, the content distribution device comprising:
a storage unit configured to store menu information including a list of a plurality of video contents; and
a data distributor configured to add cache control information to the menu information and distribute the video content, the cache control information including distribution control information in which video content and a method of distributing the video content are described.

8. A content playback terminal to be used in a content distribution system in which a content distribution device performs on-demand distribution of video content to the content playback terminal via a network, the content playback terminal comprising:
a display unit;
a temporal storage unit;
a video content playback unit configured to cause the display unit to display menu information and the video content, the menu information including a list of a plurality of video contents;
a browser unit configured to add identification information of video content to a distribution request and transmit the distribution request to the video content distribution device, the identification information being selected on the distribution menu displayed on the display unit; and
a data transmission and reception unit configured to request from the content distribution device, video content selected from the menu information, if the cache control information is not added to the menu information, and the data transmission and reception unit being configured to add information indicating the distribution control information to a distribution request for video content included in the cache control information if the cache control information is added to the menu information, transmit the distribution request to the content distribution device, and write into the temporal storage unit, the video content distributed in response to the distribution request.

9. A content distribution method for a content distribution system in which a content distribution device performs on-demand distribution of video content to a content playback terminal via a network, the content distribution method comprising:
a step for a storage unit included in the content distribution device to store menu information including a list of a plurality of video contents;
a step for a data distributor included in the content distribution device to add cache control information to the menu information and distribute the video content, the cache control information including distribution control information in which video content and a method of distributing the video content are described;
a step for a video content playback unit included in the content playback terminal to cause a display unit included in the content playback terminal to display the menu information and the video content;
a step for a browser unit included in the content playback terminal to add identification information of video content to a distribution request and transmit the distribution request to the video content distribution device, the identification information being selected on the distribution menu displayed on the display unit; and
a step for a data transmission and reception unit included in the content playback terminal to request from the content distribution device, video content selected from the menu information, if the cache control information is not added to the menu information, and the data transmission and reception unit being configured to add information indicating the distribution control information to a distribution request for video content included in the cache control information if the cache control information is added to the menu information, transmit the distribution request to the content distribution device, and write into the temporal storage unit, the video content distributed in response to the distribution request.
